# EUROPÄISCHE PATENTANMELDUNG

(11) **EP 4 682 064 A2**
(43) Veröffentlichungstag der Anmeldung: **21.01.2026**
(21) Anmeldenummer: 25220957.2
(22) Anmeldetag: 11.03.2022
(51) Int. Cl.: B64G 5/00

(54) **ATMOSPHÄRENWIEDEREINTRITTS- UND LANDEVORRICHTUNG FÜR EINE RAKETENSTUFE UND VERFAHREN FÜR DEN WIEDEREINTRITT EINER RAKETENSTUFE IN DIE ATMOSPHÄRE**

(30) Priorität: 22.03.2021 DE 102021106981
(62) Teilanmeldung aus: 22713257.8
(71) Anmelder: Klaus, Sebastian, 76549 Huegelsheim (DE)
(72) Erfinder: Klaus, Sebastian, 76549 Huegelsheim (DE)
(74) Vertreter: Tesch-Biedermann, Carmen

(57) **Zusammenfassung**

Atmosphäreneintritts- und Landevorrichtung für einen Körper zum sicheren Atmosphäreneintritt und zur sicheren Wasserung, die Folgendes aufweist: einen Transportbereich, der eingerichtet ist, um einen Körper beim Transport aufzunehmen; einen Ballute, der konfiguriert ist, um in einem ersten Zustand gefaltet und in einem zweiten Zustand entfaltet vorzuliegen und in dem zweiten Zustand die Vorrichtung von außen im Wesentlichen zu umhüllen; einen Umhüllungsmechanismus, der eingerichtet ist, die Umhüllung mit dem Ballute durchzuführen; einen Befüllungsmechanismus, der eingerichtet ist, den Ballute in entfaltetem Zustand bei einem Atmosphäreneintritt mit Luft bzw. Gas aus einer Grenzschicht zu befüllen, die zwischen dem vor der Oberfläche der Vorrichtung beim Eintritt gebildeten Plasma und der Oberfläche der Vorrichtung entsteht; und eine Steuerung, die eingerichtet ist, den Umhüllungsmechanismus und den Befüllungsmechanismus zu steuern.

## Beschreibung

### Gebiet der Erfindung

Die Erfindung bezieht sich auf eine Atmosphäreneintritts- und Landevorrichtung für einen Körper zum sicheren Atmosphäreneintritt und zur sicheren Wasserung und Verfahren für den Eintritt eines Körpers in die Atmosphäre.

### Beschreibung des Standes der Technik

Die Raketenindustrie erlebte in den letzten Jahren einen starken Boom, insbesondere durch Entwicklungen von Firmen aus der Privatwirtschaft. Dabei kam es durch diverse technische Weiterentwicklungen zu einer signifikanten Kostenreduzierung für einzelne Starts. Weltweiter Trend ist hierbei der Einsatz von wiederverwendbaren Raketen.

Bevor man in der Lage war, Raketenstufen mittels eines Triebwerkes wieder zu landen, wurden alternative Verfahren entwickelt und teilweise eingesetzt, um Raketenstufen wieder sicher zurück auf die Erde zu bringen. Die US 3,508,724, die bereits 1967 eingereicht wurde, schlägt für den Wiedereintritt einer Raketenstufe vor, an der Raketenspitze einen mit Heißluft gefüllten Ballon vorzusehen. Die Raketenstufe wassert mit den Triebwerken voraus; eine zweite Stufe der Rakete kann nicht wiederverwendet werden. Die US 3,286,951 aus dem Jahre 1963 offenbart eine Kombination aus einem aufblasbaren Hitzeschild und einem Ballon. Dabei wird der Ballon mit Gas aus einem Drucktank, der mitgeführt wird, befüllt. Der Hitzeschild schirmt dabei einen Teil der Rakete in Flugrichtung ab. Die Rakete tritt mit dem Triebwerk voran abgeschirmt durch den Hitzeschild in die Atmosphäre ein. Die US 4,504,031 aus dem Jahre 1985 offenbart ein aufblasbares Bremsmittel, wobei die Triebwerke der Rakete dazu eingesetzt werden, einen kühlen Luftstrom vor dem aufblasbaren Bremsmittel zu generieren. Auch diese Rakete fliegt bei Wiedereintritt also mit den Triebwerken voran. Es werden außerdem spezielle Drucktanks mitgeführt. Die Rakete wird von dem Schild nicht gänzlich umhüllt.

Die US 2016/0264266 A1 offenbart ein Wiedereintrittsfahrzeug, das wahlweise eine Nutzlast oder Personen zurück auf die Planetenoberfläche bringen kann. Das Wiedereintrittsfahrzeug umfasst einen entfaltbaren Aeroshell, der mit einem hitzebeständigen Gewebe überzogen ist und der aufblasbare Versteifungselemente aufweist. Zur Entfaltung des Aeroshell wird gespeicherte Energie in verschiedenen Formen verwendet.

2012 machte SpaceX erste Versuche, eine Boosterstufe der Falcon 9 wieder zu landen. Im Dezember 2015 waren diese Bestrebungen zum ersten Mal von Erfolg gekrönt. Mittlerweile hat SpaceX etliche Boosterstufen erfolgreich gelandet und wiederverwendet. Der Rekord liegt zurzeit bei neun Flügen mit derselben Boosterstufe. Dies führt zu einer signifikanten Reduzierung der Kosten für einen Raketenstart.

Bei der Landung der Boosterstufen der Falcon 9 und der Falcon Heavy wird jeweils ein einziges zentrales Triebwerk der insgesamt neun Triebwerke der Raketen in der Boosterstufe eingesetzt. Ein Problem bei einer Landung ist somit die Ausfallsicherheit, kommt es zum Absturz, so erfolgt beim Aufprall unweigerlich eine Explosion, da die Raketen mit hochentzündlichem Kerosin und Flüssigsauerstoff betankt sind. Zur Landung werden von SpaceX schwimmende Landeplattformen ("Autonomous Spaceport Droneships") und Landezonen auf festem Boden innerhalb militärischer Liegenschaften genutzt. Die Perfektion der Landung auf einer schwimmenden Plattform hat über drei Jahre Entwicklung mit etlichen Fehlversuchen gedauert und ist technisch hochkomplex. So betrachtet sind die Erfolge von SpaceX um Elon Musk eine Meisterleistung.

Doch nicht nur für große und schwere Raketen, die viel Nutzlast tragen können, existiert das Problem des Preisdrucks bzw. die Anforderung an Wiederverwendbarkeit. Es ist aber so, dass die Raketen, die mittels eines Triebwerkes wieder landen, durch die bei der Landung eingesetzte Technologie sehr schwer und damit weniger leistungsfähig werden. Die angewendete Technologie ist nicht skalierbar und sinnvoll nur auf mittlere bis große Raketen anwendbar. Außerdem kann die Technologie nicht die ganze Rakete, sondern nur die Boosterstufe, das heißt die untere Hälfte, wiederverwendbar machen. Die Orbitalstufe wird nicht wiederverwendet, sondern verbrennt beim Wiedereintritt in die Atmosphäre.

Die Leistungsfähigkeit von Raketen wird durch die Raketengrundgleichung, auch genannt Ziolkowski-Gleichung, bestimmt. Sie besagt, dass die Geschwindigkeit, die eine Rakete erreichen kann, abhängt von der Masse beim Start und der Masse am Brennschluss der Rakete: v(m) = vₑ · In (m/m₀)

Dabei ist v(m) die Geschwindigkeit der Rakete abhängig von der Masse m, vₑ ist die Ausströmgeschwindigkeit der Gase der Triebwerke (engl. "exhaust velocity"), m ist die Masse der Rakete beim Brennschluss und m₀ ist die Masse der Rakete beim Start.

Das bedeutet in einfachen Worten: Die Boosterstufen von SpaceX können nicht so hohe Geschwindigkeiten erreichen, weil sie zu viel Extragewicht tragen, zum Beispiel das Gewicht der Landebeine, das Gewicht der Steuerflächen am oberen Teil der Rakete, das Gewicht des Treibstoffes zum Umdrehen im Weltraum und zum Abbremsen vor dem Eintritt in die Atmosphäre sowie natürlich das Gewicht des Treibstoffes, der zur Landung benötigt wird.

Je kleiner eine Rakete ist, desto geringer ist typischerweise der Spielraum für zusätzliches Gewicht, bevor die Rakete überhaupt keinen Orbit im Weltraum mehr erreichen kann. Bei sogenannten Mikrolaunchern, die derzeit zu Dutzenden entwickelt werden, um Kleinstsatelliten in großer Zahl zu starten, geht man davon aus, dass die Technologie von SpaceX nicht anwendbar ist, weil sie zu schwer ist. Dementsprechend kann die Technologie nicht skaliert und damit nicht durch alle Nutzer angewandt werden, sondern bleibt auf sehr große und teure Raketen beschränkt. Außerdem ist auch bei der bekannten Wiederverwendungstechnologie der Wiederverwendung eine Grenze gesetzt: Raketen fliegen typischerweise sehr schnell; typische Geschwindigkeiten einer Boosterstufe betragen etwa 8000 km/h, die Geschwindigkeit einer orbitalen Stufe im Orbit beträgt mindestens 28.000 km/h. Zum Abbremsen nutzen die Raketenstufen den Luftwiderstand der Atmosphäre, nur ein kleiner Teil wird durch Wiederzünden der Raketentriebwerke abgebremst. Bei Boosterstufen wie der von SpaceX erhitzt sich die Luft dabei auf einige hundert Grad und sorgt für das typisch angebrannte Äußere bei der Landung. Bei orbitalen Stufen erhitzt sich die Luft dagegen bis zum Plasma, da die auftretende Energie mit dem Quadrat der Geschwindigkeit ansteigt. Eine Rakete, die ohne äußeren Schutz in die Atmosphäre eintritt, verbrennt und zerbricht in diesem Plasmastrom. Deshalb kann die Technologie von SpaceX nur für verhältnismäßig langsam fliegende Boosterstufen zur Wiederverwendung genutzt werden. Die schnell fliegenden orbitalen Stufen werden weiterhin nach einmaligem Gebrauch zerstört.

### Beschreibung der Erfindung

Es ist somit die Aufgabe der vorliegenden Erfindung, Raketenstufen wiederverwendbar zu machen, und zwar Boosterstufen und Orbitalstufen gleichermaßen. Außerdem soll die neue Technologie sowohl für große und schwere Raketen als auch für Mikrolauncher einsetzbar sein, ohne dabei den Spielraum für die Nutzlast über Gebühr einzuschränken. Außerdem soll die zu entwickelnde Technologie ausfallsicher und einfach zu beherrschen sein.

Die Aufgabe wird gelöst durch den Gegenstand der unabhängigen Patentansprüche. Vorteilhafte Ausführungsformen der Erfindung gehen aus den abhängigen Patentansprüchen hervor.

Die vorliegende internationale Patentanmeldung beansprucht die Priorität der am 22. März 2021 eingereichten deutschen Patentanmeldung mit der Anmeldenummer 10 2021 106 981.5, deren Offenbarung vollumfänglich durch Inbezugnahme in die vorliegende Patentanmeldung mit aufgenommen ist.

Gemäß einem ersten Aspekt der Erfindung bezieht sich diese auf eine Atmosphärenwiedereintritts- und Landevorrichtung für eine Raketenstufe zum sicheren Wiedereintritt einer Raketenstufe in die Atmosphäre und zur sicheren Wasserung einer Raketenstufe, die Folgendes aufweist:
einen Ballute, der konfiguriert ist, um in einem ersten Zustand gefaltet und in einem zweiten Zustand entfaltet vorzuliegen, wobei der Ballute in dem gefalteten Zustand so an einer Raketenstufe anordbar ist, dass die Aerodynamik der Raketenstufe durch den Ballute nicht beeinträchtigt ist, und wobei der Ballute in entfaltetem Zustand die Raketenstufe im Wesentlichen umhüllt;
einen Umhüllungsmechanismus, der eingerichtet ist, eine Umhüllung der Raketenstufe mit dem Ballute durchzuführen;
einen Befüllungsmechanismus, der eingerichtet ist, den Ballute in entfaltetem Zustand bei einem Wiedereintritt in die Atmosphäre mit Luft bzw. Gas aus einer Grenzschicht zu befüllen, die zwischen dem vor der Oberfläche der Vorrichtung beim Wiedereintritt gebildeten Plasma und der Oberfläche der Vorrichtung entsteht; und
eine Steuerung, die eingerichtet ist, den Umhüllungsmechanismus und den Befüllungsmechanismus zu steuern.

Die erfindungsgemäße Atmosphärenwiedereintritts- und Landevorrichtung ist für den sicheren Wiedereintritt einer Raketenstufe in die Atmosphäre geeignet, es kann sich aber natürlich auch um den erstmaligen Eintritt - und nicht um einen Wiedereintritt - einer Raketenstufe oder eines anderen auf einen Planeten zurückzuführenden Körpers (z.B. um eine Kapsel, um ein Experiment, ein Produkt usw.) handeln. Diese Fälle sind vom Schutzumfang der Erfindung per Definition mit umfasst. Normalerweise weist der auf den Planeten zurückzuführende Körper im Wesentlichen eine zylindrische Form auf. Außerdem ist die Atmosphärenwiedereintritts- und Landevorrichtung zur sicheren Wasserung einer Raketenstufe (oder eines anderen Körpers) geeignet. Das bedeutet, dass eine mit der Atmosphärenwiedereintritts- und Landevorrichtung ausgestattete Raketenstufe im Wasser schwimmt und nicht sinkt, bis sie geborgen werden kann.

Erfindungsgemäß umfasst die Atmosphärenwiedereintritts- und Landevorrichtung einen Ballute. Der Fachbegriff Ballute ist ein Kunstwort aus den englischen Begriffen Balloon und Parachute. Ein Ballute ist ein Hochgeschwindigkeitsfallschirm, der im Unterschall- und im Überschallbereich funktioniert. Anders als ein gewöhnlicher Fallschirm verfügt ein Ballute über eine geschlossene Fläche im vorderen bzw. unteren Bereich (ein normaler Fallschirm wäre hingegen in diesem Bereich offen). Erfindungsgemäß ist der Ballute konfiguriert, um in einem ersten Zustand gefaltet und in einem zweiten Zustand entfaltet vorzuliegen. Unter einem gefalteten Zustand wird dabei ein zusammengefalteter oder gerollter, in jedem Fall ein miniaturisierter Zustand verstanden, in dem der Ballute Platz sparend angeordnet werden kann. In diesem Platz sparenden gefalteten Zustand ist er so an einer Raketenstufe (oder an einem anderen Körper) anordbar bzw. angeordnet, dass die Aerodynamik der Raketenstufe durch den Ballute nicht beeinträchtigt ist. Es geht hierbei vornehmlich um die Aerodynamik der Raketenstufe beim Start bzw. während des Fluges bei eingeschalteten Triebwerken. In gefaltetem Zustand ist der Ballute deshalb bevorzugt triebwerksnah angeordnet und es ist vorteilhaft, eine rotationssymmetrische Ausgestaltung des Ballutes bzw. ihn umgebender Abdeckungen um den Raketenkörper herum zu wählen. Es ist aber auch möglich, dass der Ballute in die Rakete innenseitig integriert wird. Es kann dabei zum Beispiel eine spezielle Öffnung vorgesehen sein. Erfindungsgemäß umhüllt der Ballute in entfaltetem Zustand die Raketenstufe im Wesentlichen. Das bedeutet, dass im Wesentlichen die gesamte Raketenstufe von dem Ballute umhüllt wird und sich mithin innerhalb des Ballutes befindet. Die beiden äußeren Enden des Ballutes, also oberster Punkt und unterster Punkt, sind dabei weitestmöglich voneinander entfernt. Der Ballute muss dabei noch nicht mit Gas befüllt bzw. faltenfrei entfaltet sein. Bei einem Wiedereintritt der Raketenstufe in die Atmosphäre wird also im Wesentlichen die gesamte Raketenstufe durch den Ballute umhüllt bzw. geschützt. Dabei ist es bevorzugt so, dass nur das Triebwerk oder Triebwerke aus dem Ballute hinausragen und/oder es ist bevorzugt so, dass die Raketenspitze mit einer äußeren Fläche des Ballutes abschließt. Weitere Einzelheiten hierzu werden nachfolgend noch ausgeführt.

Erfindungsgemäß ist ein Umhüllungsmechanismus vorgesehen, der eingerichtet ist, eine Umhüllung der Raketenstufe mit dem Ballute durchzuführen. Dabei kann es sich beispielsweise um einen mechanischen oder elektromechanischen Umhüllungsmechanismus handeln, welcher ein- oder mehrteilig ausgebildet sein kann. Die Verwendung mechanischer Bestandteile ist bevorzugt, da diese sehr ausfallsicher und gegebenenfalls auch redundant vorgesehen werden können. Mittels des Umhüllungsmechanismus kann die Umhüllung der Raketenstufe durchgeführt werden, das heißt der Ballute kann von dem gefalteten Zustand in den entfalteten Zustand überführt werden. Dabei muss der Ballute noch nicht vollständig in Form gebracht sein, es geht vielmehr um das Auseinanderziehen der beiden äußeren Enden des Ballutes. In diesem Fall erfolgt ein Auseinanderziehen der äußeren Enden des Ballutes und dadurch ein Umhüllen der Raketenstufe. Es ist außerdem möglich, den Ballute mittels des Umhüllungsmechanismus zunächst freizulegen, z.B. eine äußere Transporthülle des Ballutes zu öffnen, abzuwerfen oder abzusprengen. Erst danach erfolgt ein Auseinanderziehen des Ballute und die eigentliche Umhüllung.

Erfindungsgemäß ist des Weiteren ein Befüllungsmechanismus vorgesehen, der eingerichtet ist, den Ballute in entfaltetem Zustand bei einem Wiedereintritt in die Atmosphäre mit Luft (oder anderen in der Atmosphäre vorhandenen Gasen) aus einer Grenzschicht zu befüllen, die zwischen dem vor der Oberfläche der Vorrichtung beim Wiedereintritt gebildeten Plasma und der Oberfläche der Vorrichtung entsteht. Ein derartiger Befüllungsmechanismus ist äußerst vorteilhaft, da es nicht notwendig ist, extra einen Drucktank oder Druckgasbehälter mit in den Orbit zu transportieren. Dies reduziert das Gewicht einer Raketenstufe und erhöht die maximal mögliche Nutzlast. Die Tatsache, dass Luft aus der Grenzschicht zwischen Plasma und Oberfläche der Atmosphärenwiedereintritts- und Landevorrichtung zum Befüllen des Ballute verwendet werden kann, hat sich bei intensiven Untersuchungen des Erfinders gezeigt. Die Luft, die in dieser Grenzschicht existiert ist, ist zwar sehr heiß. Es wäre deshalb bei Nutzung der Luft eigentlich ein Verbrennen der Atmosphärenwiedereintritts- und Landevorrichtung zu befürchten. Die heiße Luft wird aber erfindungsgemäß nur in einem sehr geringen Maße benötigt bzw. verwendet und zum Beispiel gezielt und nur gering dosiert in den Ballute gesaugt. So wird ein Verbrennen der Vorrichtung vermieden und stattdessen eine Nutzung der heißen Luft möglich. Der Befüllungsmechanismus kann wiederum ein- oder mehrteilig ausgebildet sein und wird weiter unten noch näher beschrieben.

Erfindungsgemäß umfasst die Atmosphärenwiedereintritts- und Landevorrichtung eine Steuerung, die eingerichtet ist, den Umhüllungsmechanismus und den Befüllungsmechanismus zu steuern. Die Steuerung selbst kann dabei ein- oder mehrteilig ausgebildet sein, sie kann zum Beispiel eine CPU, eine Fernsteuerung, eine Zeitsteuerung und/oder Ähnliches aufweisen. Die Steuerung ist insbesondere eingerichtet, den Umhüllungsmechanismus zu einem geeigneten Zeitpunkt zu starten. Bevorzugt kann sie auch die Geschwindigkeit der Umhüllung steuern, dies muss aber nicht der Fall sein. Es ist möglich, dass nach einem Aktivierungssignal der Umhüllungsmechanismus vollständig und z.B. mit konstanter Geschwindigkeit die Umhüllung vornimmt, also den Ballute vom gefalteten Zustand in den entfalteten Zustand überführt bzw. seine äußeren Enden auseinanderzieht. Der Befüllungsmechanismus kann ebenfalls durch die Steuerung aktiviert werden, er kann aber auch während des Fluges dauerhaft oder intermittierend mittels der Steuerung gesteuert werden. Insbesondere ist es auch möglich, den Befüllungsmechanismus zu regeln und so einen Druck in dem Ballute auf einem vorbestimmten Druckniveau (absolut oder bezogen auf den Umgebungsdruck) zu halten.

Die angesprochene Raketenstufe selbst ist nicht Bestandteil der Atmosphärenwiedereintritts- und Landevorrichtung. Es ist aber möglich, ein System mit einer Raketenstufe und der Atmosphärenwiedereintritts- und Landevorrichtung auszugestalten. Im Übrigen ist es möglich, eine existierende Raketenstufe mit der erfindungsgemäßen Atmosphärenwiedereintritts- und Landevorrichtung nachzurüsten.

Gemäß einer bevorzugten Ausführungsform der Erfindung ist der Ballute so an einer Raketenstufe anordbar, dass bei einem Wiedereintritt in die Atmosphäre ein Raketentriebwerk der Raketenstufe in Flugrichtung hinten angeordnet ist. Die Wiedereintrittsrichtung der Raketenstufe unterscheidet sich erfindungsgemäß also von der Wiedereintrittsrichtung gemäß dem oben zitierten Stand der Technik. Dies hat den Vorteil, dass das Raketentriebwerk beim Wiedereintritt in die Atmosphäre besser geschützt wird. Bei einer Wasserung ist es möglich, das Raketentriebwerk sicher aus dem Wasser herauszuhalten und nicht etwa einzutauchen, was seewasserbedingter Korrosion vorbeugt. Außerdem ist es so, dass eine Rakete vor dem Entfalten des Ballutes keine Bewegungsumkehr erfahren muss, dies spart Treibstoff und ein Flugmanöver entfällt.

Gemäß einer bevorzugten Ausführungsform der Erfindung weist der Ballute in einem oberen Bereich - bezogen auf seine Ausrichtung beim Flug durch die Atmosphäre - einen Strömungsabriss-Ring auf. Die Bauform des Ballutes entspricht damit wesentlich den bereits bekannten Bauformen eines Ballutes (im Wesentlichen Isotensoid). Allerdings wird bei herkömmlichen Balluten Luft bzw. Gas in den Ballute durch Öffnungen in dem Ballute selbst, zum Beispiel unterhalb des Strömungsabriss-Ringes, vorgenommen. Diese Öffnungen in dem Ballute selbst existieren erfindungsgemäß so nicht, denn an den Kanten solcher Öffnungen würde der Ballute bei einem Wiedereintritt verbrennen und bei einer Wasserung des Ballute würde durch solche Öffnungen Wasser in den Ballute eindringen. Erfindungsgemäß ist anstelle der beschriebenen Öffnungen in dem Ballute selbst vorgesehen, den Ballute mit Luft aus einer Grenzschicht zu befüllen, wozu beispielsweise ein spezieller formstabiler Hauptkörper an dem Ballute angeordnet wird, im den ein Lufteinlass integriert sein kann (siehe unten). Die Form eines Ballutes kann im Wesentlichen in seinem in Flugrichtung vorderen (d.h. unteren) Bereich durch einen Kegel beschrieben werden, an den sich im oberen Bereich eine Halbkugel anschließt. Im Bereich des größten Durchmessers zwischen Kegel und Halbkugel ist der Strömungsabriss-Ring in Form eines Torus vorgesehen. Geringe Abweichungen von der beschriebenen Form sind möglich, ohne dass dies die Strömungseigenschaften des Ballutes wesentlich beeinträchtigt.

Gemäß einer bevorzugten Ausführungsform der Erfindung weist die Atmosphärenwiedereintritts- und Landevorrichtung einen formstabilen Hauptkörper mit einer zentralen zylindrischen Durchgangsöffnung auf, deren Innendurchmesser auf den Außendurchmesser einer Raketenstufe abgestimmt ist. An diesem formstabilen Hauptkörper ist der Ballute direkt oder indirekt befestigt. Mittels der zentralen zylindrischen Durchgangsöffnung kann der Hauptkörper bzw. die Atmosphärenwiedereintritts- und Landevorrichtung um eine Raketenstufe herum angeordnet werden, was die beabsichtigte Umhüllung der Raketenstufe elegant ermöglicht. Eine Abstimmung vom Innendurchmesser der zylindrischen Durchgangsöffnung auf den Außendurchmesser einer Raketenstufe ermöglicht einen guten Abschluss zwischen dem Ballute und der Raketenstufe, aber auch eine stabile Relativposition zwischen der Atmosphärenwiedereintritts- und Landevorrichtung einerseits und der Raketenstufe andererseits. Es ist insbesondere möglich, die erfindungsgemäße Vorrichtung gleitend über die Außenhaut einer Raketenstufe zu verschieben.

Gemäß einer bevorzugten Ausführungsform der Erfindung weist der Hauptkörper an einer Stirnseite der zylindrischen Durchgangsöffnung außen um die zylindrische Durchgangsöffnung herum ein hitzebeständiges und insbesondere abgeflachtes Kopfstück auf, an dem ein - bezogen auf die Ausrichtung des Ballutes bei Wiedereintritt in die Atmosphäre - vorderes Ende des Ballutes befestigt ist. Der Ballute kann also rotationssymmetrisch an dem Hauptkörper befestigt werden, wobei die Befestigung an dem Hauptkörper direkt oder indirekt an dem Kopfstück erfolgt, so dass der Rand des Kopfstückes mit dem Ballute abschließen kann. Das Kopfstück kann dabei beispielsweise als flacher Teller ausgeformt sein, der in der Mitte die zylindrische Durchgangsöffnung bzw. ein hohles Zylinderstück aufweist. Eine Neigung des Kopfstückes zu einer zentralen Achse der Durchgangsöffnung bzw. dem Zylinderstück (und damit auch zu einer Raketenachse) kann dabei etwa 40° bis 50° betragen, zum Beispiel etwa 45°. Die Befestigung des Ballutes an dem Kopfstück kann direkt oder indirekt erfolgen, indirekt zum Beispiel über eine Befestigung am Zylinderstück des Hauptkörpers, das die zylindrische Durchgangsöffnung bildet. Bevorzugt weist das Kopfstück als Material eine Kombination aus Fasermaterial und Matrixmaterial auf, beispielsweise SiC/SiC, C/SiC und/ oder C/C.

Gemäß einer bevorzugten Ausführungsform der Erfindung ist ein - bezogen auf die Ausrichtung des Ballutes bei Wiedereintritt in die Atmosphäre - hinteres Ende des Ballutes an einer Raketenstufe befestigbar. Der Ballute selbst kann rotationssymmetrisch um seine zentrale Achse bzw. rotationssymmetrisch um die Raketenstufe herum ausgebildet sein. Bevorzugt ist die Befestigung des Ballutes an der Raketenstufe eine umlaufende Befestigung. Bevorzugt ist es so, dass der Ballute an einer Raketenstufe triebwerksnah befestigt ist. Je triebwerksnäher die Befestigung erfolgt, desto vollständiger kann eine Umhüllung der Raketenstufe mit dem Ballute insgesamt erfolgen.

Gemäß einer bevorzugten Ausführungsform der Erfindung ist die Atmosphärenwiedereintritts- und Landevorrichtung eingerichtet, den Hauptkörper von einer Startbefestigungsanordnung an einer Raketenstufe zu einer Landebefestigungsanordnung an der Raketenstufe außen entlang der Raketenstufe zu bewegen. Die Startbefestigungsanordnung und die Landebefestigungsanordnung bezeichnen dabei die jeweiligen Punkte bzw. Regionen, an der der Hauptkörper während der Startphase bzw. während der Landephase außen an der Raketenstufe bzw. um diese Raketenstufe herum angeordnet ist. Die Bewegung von der Startbefestigungsanordnung zur Landebefestigungsanordnung kann beispielsweise durch mechanischen Zug oder Schub, aber auch elektromechanisch erfolgen.

Gemäß einer bevorzugten Ausführungsform der Erfindung ist die Startbefestigungsanordnung der Vorrichtung triebwerksnah vorgesehen. Zusätzlich oder alternativ kann die Landebefestigungsanordnung raketenspitzennah vorgesehen sein.

Gemäß einer bevorzugten Ausführungsform der Erfindung ist der Hauptkörper mittels des Umhüllungsmechanismus außen entlang der Raketenstufe bewegbar. Insbesondere kann er daran entlang gleiten; bei dem Umhüllungsprozess einer Raketenstufe mittels des Ballutes ist es also so, dass der Ballute an einem Ende der Rakete fest/unbeweglich direkt oder indirekt angeordnet ist. Er kann dabei einen weitgehend luftundurchlässigen Abschluss mit der Raketenstufe bilden, beispielsweise mittels eines Klemmmechanismus oder Spannmechanismus, aber auch andere Befestigungsarten sind möglich. Ein Beispiel ist ein Spannring, der einen Teil des Ballutes zwischen dem Spannring und der Rakete einklemmt oder einspannt. Das andere Ende des Ballutes ist hingegen nicht ortsfest an der Raketenstufe angeordnet, sondern mit dem formstabilen Hauptkörper der Vorrichtung verbunden. Dieser formstabile Hauptkörper kann nun entlang der Hauptachse der Raketenstufe verschoben werden. Beispielsweise kann der Hauptkörper von einer Startbefestigungsanordnung, die triebwerksnah ist, zu einer Landebefestigungsanordnung, die raketenspitzennah ist, verschoben werden. Hierzu können insbesondere mechanische Mechanismen eingesetzt werden, zum Beispiel eine Seilwinde, ein Zahnradsystem und/oder ein Linearantrieb. Aber auch andere, zum Beispiel elektrische oder elektromechanische Mechanismen sind möglich. Außerdem ist es möglich, diese Systeme redundant vorzusehen, um für eine bessere Ausfallsicherheit zu sorgen. Durch die Bewegung des Hauptkörpers außen entlang der Raketenstufe entfaltet sich der Ballute, wobei über den Grad der Bewegung des Hauptkörpers entlang der Raketenstufe eingestellt werden kann, wie weit ein Teil einer Raketenstufe, insbesondere eine Raketenspitze, aus dem Ballute hinausragt. Dabei ist es vorteilhaft, die Raketenspitze nicht oder nur leicht aus dem Ballute hinausragen zu lassen. Die Raketenspitze ist verglichen mit den Raketentriebwerken relativ unempfindlich insbesondere in Hinblick auf Korrosion durch Salzwasser und den Aufprall bei der Wasserung.

Gemäß einer bevorzugten Ausführungsform der Erfindung weist die Atmosphärenwiedereintritts- und Landevorrichtung eine Transportabdeckung auf, die den Ballute bei einem Raketenstart abdeckt, und die öffenbar oder trennbar ist. Gemäß einem Beispiel handelt es sich um eine absprengbare Außenschale. Es ist aber auch möglich, dass die Transportabdeckung mittels eines Klappmechanismus oder Faltmechanismus realisiert ist.

Gemäß einer bevorzugten Ausführungsform der Erfindung weist das Kopfstück des formstabilen Hauptkörpers der Vorrichtung einen verschließbaren Lufteinlass auf, durch den die Luft aus der Grenzschicht in den Ballute einströmen kann. Der Lufteinlass ist hier also nicht im Ballute selbst vorgesehen, sondern in dem an den Ballute angrenzenden hitzebeständigen Kopfstück. Dabei kann der Lufteinlass selbst auf unterschiedliche Weise realisiert sein. Der Lufteinlass kann beispielsweise eine oder mehrere Klappen, eine oder mehrere Lamellen und/oder eine oder mehrere Bohrungen aufweisen. Das Vorsehen einer Klappe ist dabei besonders einfach, da das Öffnen und Schließen einer Klappe auf einfache Weise gesteuert werden kann. Hierzu kann wiederum die erfindungsgemäße Steuerung eingesetzt werden. Gemäß einer besonders bevorzugten Ausführungsform der Erfindung umfasst der Lufteinlass zwei Klappen, die zueinander diametral gegenüberliegend angeordnet sind. Es ist aber auch möglich, mehr als zwei Klappen, beispielsweise drei, vier, fünf oder noch mehr Klappen vorzusehen und diese regelmäßig oder unregelmäßig in dem Kopfstück anzuordnen.

Gemäß einer bevorzugten Ausführungsform der Erfindung ist an dem Hauptkörper mindestens eine Turbine derart angeordnet, dass durch den Lufteinlass einströmende Luft von der Turbine ansaugbar und in den Ballute hineindrückbar ist, sodass im Ballute ein Überdruck verglichen mit dem Umgebungsdruck entstehen kann. Bevorzugt handelt es sich dabei nur um einen leichten Überdruck, dies ist für Formstabilität und Abbremsverhalten der erfindungsgemäßen Vorrichtung bereits ausreichend. Der auf den Wiedereintrittskörper wirkende Staudruck setzt **sich aus dem** Umgebungsdruck (statischer Druck) und dem dynamischen Druck aufgrund der Geschwindigkeit zusammen. Beim Wiedereintritt in die Atmosphäre liegt der statische Druck nur wenig über dem Vakuum, der dynamische Druck hingegen ist vergleichsweise hoch (die Geschwindigkeit v beträgt einige Kilometer pro Sekunde, zum Beispiel etwa 8 km/s). Bei der Wasserung hingegen ist der statische Druck vergleichsweise hoch, der dynamische Druck hingegen relativ gering die Geschwindigkeit v beträgt nur noch einige Meter pro Sekunde, zum Beispiel etwa 10 m/s). Gemäß einer bevorzugten Ausführungsform der Erfindung wird der Befüllungsmechanismus und damit der Druck in dem Ballute so gesteuert, dass der Druck p in dem Ballute folgende Bedingung erfüllt: p_{statisch} + 1,1*p_{dynamisch} ≤ p ≤ pstatisch + 1,3*p_{dynamisch}. Bevorzugt ist es des Weiteren so, dass die Anzahl der Turbinen auf die Anzahl der Klappen bzw. verschiedenen Lufteinlässe in dem Kopfstück abgestimmt ist. Bevorzugt ist es so, dass die Turbine oder die Turbinen mittels der Steuerung gesteuert wird bzw. werden.

Gemäß einer bevorzugten Ausführungsform der Erfindung ist der Ballute hochtemperaturfest ausgebildet und weist eine geringe Luftdurchlässigkeit auf. Die Hochtemperaturfestigkeit wird benötigt, um den hohen Temperaturen beim Wiedereintritt zu widerstehen. Anders als bei bereits bekannten Systemen ist es dabei nicht notwendig, den Ballute zwingend vollständig luftundurchlässig auszubilden. Der Ballute kann problemlos über eine geringe Luftdurchlässigkeit verfügen, da fortwährend über den Lufteinlass Luft bzw. Gas nachgeführt werden kann, die mittels der Turbinen in dem Ballute auf einen leichten Überdruck gebracht werden kann. Dies ist ebenfalls ein wichtiger Vorteil verglichen mit Lösungen aus dem Stand der Technik, die auf Druckgasbehälter zurückgreifen. Ist das darin enthaltene Gas erst einmal aufgebraucht, so kann es nicht weiter ersetzt werden. Deshalb sind für Lösungen gemäß dem Stand der Technik absolut luftundurchlässige Ausführungen eines Ballutes notwendig.

Gemäß einer bevorzugten Ausführungsform der Erfindung weist der Ballute ein Keramikgewebe und/ oder ein Kohlefasergewebe auf. Gemäß einer bevorzugten Ausführungsform weist das Keramikgewebe Siliciumcarbid auf, das insbesondere mit Zirkonoxid und / oder Inconel beschichtet sein kann, um die Luftdurchlässigkeit des Siliciumcarbid-Gewebes zu verringern.

Gemäß einem zweiten Aspekt der Erfindung bezieht sich diese auf ein System, das Folgendes aufweist:
die Atmosphärenwiedereintritts- und Landevorrichtung für eine Raketenstufe zum sicheren Wiedereintritt einer Raketenstufe in die Atmosphäre und zur sicheren Wasserung einer Raketenstufe gemäß einem der vorangehenden Ansprüche; und
eine Raketenstufe.

Gemäß einer bevorzugten Ausführungsform ist die Raketenstufe eine untere Raketenstufe bzw. eine Boosterstufe. Gemäß einer weiteren Ausführungsform der Erfindung ist die Raketenstufe eine Orbitalstufe. Mittels des erfindungsgemäßen Systems ist es also erstmals möglich, auch Orbitalstufen sicher aus dem Orbit wieder zurück auf die Erde zu holen. Der Grad der Wiederverwendbarkeit von Raketen insgesamt erhöht sich dadurch drastisch, denn es war vormals nicht möglich, Orbitalstufen zurückzuführen.

Gemäß einer bevorzugten Ausführungsform der Erfindung ist zusätzlich zu dem Befüllungsmechanismus, der eingerichtet ist, den Ballute in entfaltetem Zustand bei einem Wiedereintritt in die Atmosphäre mit Luft bzw. Gas aus einer Grenzschicht zu befüllen, die zwischen dem vor der Oberfläche der Vorrichtung beim Wiedereintritt gebildeten Plasma und der Oberfläche der Vorrichtung entsteht, ein weiterer Befüllungsmechanismus vorgesehen, der eingerichtet ist, den Ballute mit Gas, insbesondere mit Sauerstoff, aus einem Raketentank zu befüllen, um den Ballute erstmalig vor einem Wiedereintritt in die Atmosphäre in Form zu bringen. Eine Rakete führt ohnehin Flüssigsauerstoff als Oxidator mit und der zugehörige Tank steht aus strukturellen Gründen unter einem Überdruck von ungefähr zwei bis drei bar. Dieses Gas kann zum Beispiel nach Brennschluss der Rakete und nach einem Umhüllen der Rakete mit dem Ballute über ein Ventil einfach nach außen abgelassen werden. Es gelangt direkt für ein erstes Auflasen in den Ballute, der die Raketenstufe dann bereits umhüllt. Auch bei dieser Ausführungsform kann also auf ein Mitführen zusätzlicher Druckbehälter verzichtet werden und zwar selbst dann, wenn ein erstes in Form bringen des Ballute noch vor dem Wiedereintrittsbeginn gewünscht ist.

Gemäß einem dritten Aspekt der Erfindung bezieht sich diese auf ein Verfahren für den Wiedereintritt einer Raketenstufe in die Atmosphäre, insbesondere unter Verwendung der Atmosphärenwiedereintritts- und Landevorrichtung gemäß einer der vorstehend beschriebenen Ausführungsformen, das die folgenden Schritte aufweist:
Umhüllen der Raketenstufe mit einem Ballute vor dem Wiedereintritt, sodass ein Wiedereintrittskörper gebildet wird; und
Befüllen des Ballutes mit Luft aus einer Grenzschicht, die zwischen einem beim Wiedereintritt gebildeten Plasma und der (kühleren) Oberfläche des Wiedereintrittskörpers entsteht.

Gemäß einer bevorzugten Ausführungsform der Erfindung weist das Verfahren des Folgenden den weiteren Schritt auf: Erzeugen eines Überdruckes in dem Ballute.

Hierdurch kann vermieden werden, dass der Ballute absolut luftundurchlässig auszuführen ist, was sich wiederum positiv auf den Materialverbrauch für den Ballute und damit auch auf die Masse des Ballutes auswirkt.

Gemäß einer weiteren bevorzugten Ausführungsform weist das Verfahren des Weiteren den folgenden Schritt auf: Wassern der Raketenstufe mit der Raketenspitze voraus.

Die Raketenspitze ist deutlich unempfindlicher als die Raketentriebwerke, weshalb diese Wiedereintritts- bzw. Wasserungsausrichtung bevorzugt ist.

Im Übrigen gilt all das, was im Zusammenhang mit dem ersten und zweiten Aspekt der Erfindung ausgesagt wurde, auch für den dritten Aspekt der Erfindung.

Gemäß einem vierten Aspekt der Erfindung bezieht sich diese auf eine Atmosphäreneintritts- und Landevorrichtung für einen Körper zum sicheren Atmosphäreneintritt und zur sicheren Wasserung, die Folgendes aufweist:
einen Transportbereich, der eingerichtet ist, um einen Körper beim Transport aufzunehmen;
einen Ballute, der konfiguriert ist, um in einem ersten Zustand gefaltet und in einem zweiten Zustand entfaltet vorzuliegen und in dem zweiten Zustand die Vorrichtung von außen im Wesentlichen zu umhüllen;
einen Umhüllungsmechanismus, der eingerichtet ist, die Umhüllung mit dem Ballute durchzuführen;
einen Befüllungsmechanismus, der eingerichtet ist, den Ballute in entfaltetem Zustand bei einem Atmosphäreneintritt mit Luft bzw. Gas aus einer Grenzschicht zu befüllen, die zwischen dem vor der Oberfläche der Vorrichtung beim Eintritt gebildeten Plasma und der Oberfläche der Vorrichtung entsteht; und
eine Steuerung, die eingerichtet ist, den Umhüllungsmechanismus und den Befüllungsmechanismus zu steuern.

Gemäß diesem Aspekt der Erfindung werden Grundgedanken der Erfindung auf den allgemeinen Fall übertragen, bei dem es nicht speziell um die Rückführung von Raketenstufen und auch nicht um die Rückführung von anderen speziell geformten Körpern geht. Gemäß dieser Ausführungsform ist es stattdessen so, dass mit der Atmosphären(wieder)eintritts- und Landevorrichtung im Prinzip beliebige Körper auf die Planetenoberfläche (zurück-) transportiert werden können. Zu diesem Zweck weist die Vorrichtung den Transportbereich auf, der dazu eingerichtet ist, den Körper beim Transport aufzunehmen. Der Körper kann also daran befestigt und/ oder von dem Transportbereich vollständig umschlossen sein. Dies hängt von der Größe, der Form und auch von der Materialbeschaffenheit des Körpers ab. In jedem Fall ist es so, dass für den Atmosphäreneintritt der Körper im Wesentlichen vollständig von dem Ballute umhüllt und damit geschützt ist. Es ist beispielsweise denkbar, einen Transportbereich im inneren Bereich des Zylinderstückes, wie im Zusammenhang mit dem ersten Aspekt der Erfindung beschrieben, als Transportbereich vorzusehen oder zu einem solchen umzugestalten. Dabei muss die Form des Transportbereiches natürlich nicht zylindrisch sein bzw. bleiben, sie kann es aber sein. Wie beim ersten Aspekt der Erfindung kann die Vorrichtung ein tellerartiges Kopfstück aufweisen und der Ballute kann in der beschriebenen Weise daran direkt oder indirekt befestigt sein. Allerdings ist es vorteilhaft so, dass das tellerartige Kopfstück keine zentrale Öffnung aufweist, da die Vorrichtung nicht über die Oberfläche einer Raketenstufe hinwegbewegt zu werden braucht, um die Raketenstufe zu umhüllen. Im Ergebnis kann die Atmosphäreneintritts- und Landevorrichtung gemäß dem vierten Aspekt deshalb kompakter ausgebildet sein. Der Befüllungsmechanismus ist identisch wie beim ersten Aspekt der Erfindung detailliert beschrieben ausgebildet. Der Umhüllungsmechanismus kann, muss aber nicht vereinfacht sein und er kann beispielsweise nur durch das Öffnen oder Absprengen einer Transportabdeckung realisiert sein, so dass der Ballute freigesetzt wird und zum Befüllen bereit ist.

Gemäß einem fünften Aspekt der Erfindung bezieht sich diese auf ein Verfahren für den Eintritt eines Körpers in die Atmosphäre, insbesondere unter Verwendung der Atmosphäreneintritts- und Landevorrichtung wie gemäß dem vierten Aspekt der Erfindung beschrieben, das die folgenden Schritte aufweist:
Umhüllen des Körpers mit einem Ballute vor dem Atmosphäreneintritt, so dass ein Wiedereintrittskörper gebildet wird; und
Befüllen des Ballutes mit Luft aus einer Grenzschicht, die zwischen einem beim Atmosphäreneintritt gebildeten Plasma und der Oberfläche des Atmosphäreneintrittskörpers entsteht.

Dabei erfolgt das Befüllen des Ballute bevorzugt durch kontrolliertes Einsaugen der Luft, beispielsweise mittels Turbinen. Insbesondere wird die Luft des Weiteren in dem Ballute gestaut; der Ballute weist keine Öffnungen auf, die nicht verschließbar sind. Im Übrigen gilt auch bei dieser Ausführungsform grundsätzlich das, was auch bereits im Zusammenhang mit dem vierten Aspekt der Erfindung ausgesagt worden ist.

Gemäß einem sechsten Aspekt der Erfindung bezieht sich diese auf ein Verfahren für das Befüllen eines Ballutes bei einem Atmosphäreneintritt, das die folgenden Schritte aufweist: Befüllen des Ballutes mit Luft aus einer Grenzschicht, die zwischen einem beim Atmosphäreneintritt gebildeten Plasma und der Oberfläche des Atmosphäreneintrittskörpers entsteht, wobei die Luft kontrolliert durch einen Lufteinlass im Atmosphäreneintrittskörper nach innen in den Ballute gesaugt und insbesondere in dem Ballute gestaut wird. Durch die Stauung kann in dem Ballute ein Überdruck zum Umgebungsdruck aufgebaut werden. Das kontrollierte Ansaugen und die im Wesentlichen dichte Ausführung des Ballute ermöglichen es, mit nur wenig Luft den Ballute in Form zu bringen und zu halten. Deshalb ist es möglich, die heiße Luft aus der Grenzschicht hierfür zu nutzen, ohne dass der Ballute oder die von ihm umhüllte Fracht beim Eintritt in die Atmosphäre verbrennt.

Die beschriebenen Ausführungsformen der Erfindung können ganz oder teilweise miteinander kombiniert werden, sofern sich dadurch keine technischen Widersprüche ergeben.

Die Erfindung wird noch besser verstanden werden unter Bezugnahme auf die beigefügten Figuren. Dabei zeigen:
- Fig. 1:: illustriert schematisch einen Start und Wiedereintritt der erfindungsgemäßen Atmosphärenwiedereintritts- und Landevorrichtung in die Atmosphäre mit anschließender Wasserung;
- Fig. 2:: illustriert schematisch eine Atmosphärenwiedereintritts- und Landevorrichtung in mehreren Ansichten inklusive einem Befüllungsmechanismus für den Ballute mit Luft aus einer Grenzschicht zwischen Plasma und Oberfläche des Wiedereintrittskörpers;
- Fig. 3:: illustriert schematisch einen Umhüllungsmechanismus gemäß der Erfindung;
- Fig. 4:: illustriert unterschiedliche Arten von Lufteinlässen für einen Befüllungsmechanismus;
- Fig. 5:: illustriert schematisch Befestigungen eines Ballutes; und
- Fig. 6:: zeigt ein Flussdiagramm eines erfindungsgemäßen Verfahrens für den Wiedereintritt einer Raketenstufe in die Atmosphäre.

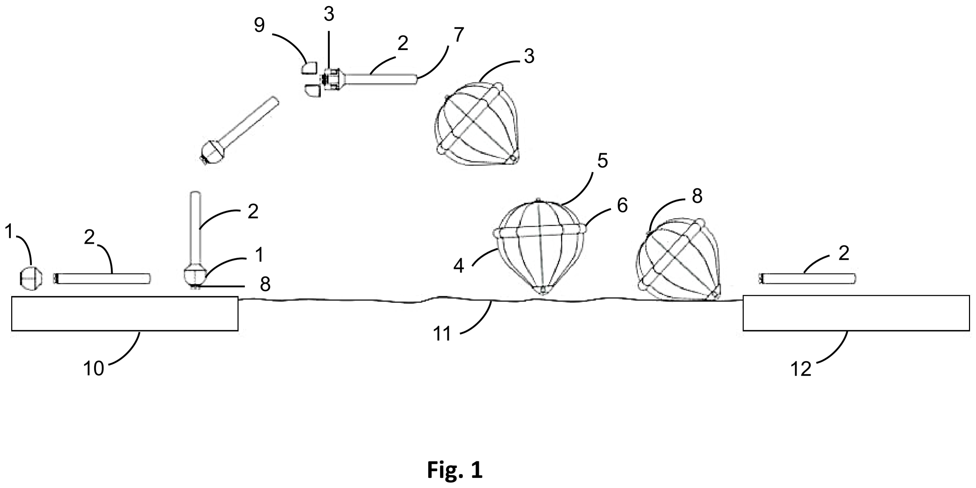

Figur 1 illustriert schematisch einen Start und Wiedereintritt der erfindungsgemäßen Atmosphärenwiedereintritts- und Landevorrichtung in die Atmosphäre mit anschließender Wasserung. Anhand der in Figur 1 gezeigten Darstellung können wesentliche Aspekte der Erfindung bereits deutlich gemacht werden. Die erfindungsgemäße Atmosphärenwiedereintritts- und Landevorrichtung 1 ist auch an bestehenden Raketenstufen 2 nachrüstbar, das heißt sie ist für einen breiten Einsatz ausgelegt. Sie eignet sich für unterschiedliche Raketentypen und insbesondere für große und kleine Raketenstufen. In der schematischen Darstellung in Figur 1 wird in der Startzone 10 das System aus Atmosphärenwiedereintritts- und Landevorrichtung 1 und Raketenstufe 2 zu einem Gesamtsystem zusammengesetzt. Anschließend wird die Rakete 2 zusammen mit der Atmosphärenwiedereintritts- und Landevorrichtung 1 in Startposition gebracht. Dabei ist die Atmosphärenwiedereintritts- und Landevorrichtung 1 im unteren Bereich der Rakete 2 nahe den Triebwerken 8 angeordnet. Sie umschließt dabei die Raketenstufe 2 im Wesentlichen rotationssymmetrisch und hat keinen wesentlichen negativen Einfluss auf die aerodynamischen Flugeigenschaften der Raketenstufe 2.

Nachdem die Raketenstufe 2 die gewünschte Flughöhe / den gewünschten Orbit erreicht hat, wird mittels einer Steuerung der Umhüllungsmechanismus aktiviert beziehungsweise gesteuert: Dazu wird im gezeigten Beispiel zunächst eine Transportabdeckung 9 im vorliegenden Beispiel abgesprengt und der der darunter liegende Ballute 3 wird freigelegt. Dann wird mittels des Umhüllungsmechanismus der Ballute 3 von seinem gefalteten Zustand in seinen entfalteten Zustand überführt und der Ballute 3 umhüllt die herabsinkende Raketenstufe 2 dabei im Wesentlichen. Konkret wird dabei ein Ende des Ballutes 3 von dem triebwerksnahen Ende der Raketenstufe 2 zum raketenspitzennahen Ende der Raketenstufe 2 gezogen, so dass die Raketenstufe 2 im Wesentlichen umhüllt ist. Dabei wird das entgegengesetzte Ende des Ballutes 3 festgehalten beziehungsweise ist fest an der Raketenstufe 2 fixiert. Beim Wiedereintritt in die Erdatmosphäre ist deshalb die Spitze 7 der Raketenstufe 2 nach vorn bzw. unten gerichtet, während das Triebwerk 8 nach hinten bzw. oben ausgerichtet ist.. Im unteren Bereich 4 ist der Ballute im Wesentlichen kegelförmig, im oberen Bereich 5 hat er im Wesentlichen die Form einer Halbkugel und an der Stelle mit dem größten Durchmesser befindet sich ein Strömungsabriss-Ring 6. Die Aufgabe dieses Ringes ist es, an dieser Stelle gezielt die Luftströmung abreißen zu lassen. Dadurch wird der Ballute 3 bei Über- und Unterschallgeschwindigkeit in der Atmosphäre stabilisiert. Er erreicht im Flug durch die Atmosphäre schließlich eine Grenzgeschwindigkeit und schlägt dann mit der Raketenspitze 7 voran auf dem Wasser 1 auf. Die gegenüber Salzwasser empfindlichen Raketentriebwerke 8 ragen dabei aus dem Wasser 11 heraus und werden somit geschützt. Anschließend kann die Raketenstufe 2 geborgen werden und auf einem Instandsetzungsgelände 12 für eine Wiederverwendung hergerichtet werden.

Der in Figur 1 illustrierte Prozess ist sowohl für Boosterstufen als auch für Orbitalstufen von Raketen durchführbar. Außerdem ist es möglich, die erfindungsgemäße Atmosphärenwiedereintritts- und Landevorrichtung im Falle eines Startabbruches als Rettungsvorrichtung einzusetzen - ab einer Höhe von etwa 2km bis 3km über der Erdoberfläche ist ausreichend Zeit für eine Entfaltung des Ballutes und damit für eine sichere Landung.

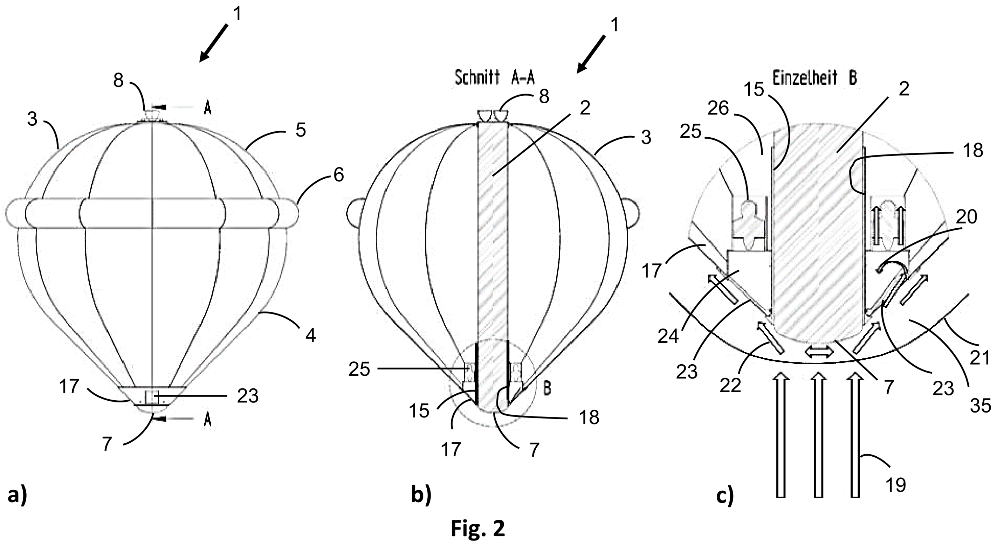

Figur 2 illustriert schematisch eine Atmosphärenwiedereintritts- und Landevorrichtung 1 in mehreren Ansichten inklusive einem Befüllungsmechanismus für den Ballute 3 mit Luft aus einer Grenzschicht zwischen Plasma und Oberfläche des Wiedereintrittskörpers. Figur 2a illustriert eine Seitenansicht der erfindungsgemäßen Atmosphärenwiedereintritts- und Landevorrichtung 1 mit einem Ballute 3. Der Ballute ist in entfaltetem Zustand dargestellt. Er umhüllt dabei im Wesentlichen die Raketenstufe 2. Über den Ballute 3 hinaus ragen dabei nur die Triebwerke 8 der Raketenstufe 2, im gezeigten Beispiel schließt die Raketenspitze 7 mit der Oberfläche des tellerartigen Kopfstückes 17 der Vorrichtung 1 bündig ab. Es wäre aber auch möglich, dass etwas mehr von der Raketenspitze 7 aus der erfindungsgemäßen Vorrichtung 1 hinausragt, ein Grad des Herausragens / Vorstehens kann insbesondere einstellbar sein. Figur 2a illustriert im Wesentlichen die Form des Ballutes 3 und den Ansatz des tellerartigen Kopfstückes 17 an den Ballute im Bereich der Raketenspitze 7 der Raketenstufe 2. Der obere Bereich 5 des Ballutes weist im Wesentlichen die Form einer Halbkugel auf, der untere Bereich 4 ist im Wesentlichen kegelförmig ausgebildet. Im Bereich des größten Durchmessers ist darüber hinaus der Strömungsabriss-Ring 6 angeordnet. Die konkrete Bauform des Ballutes 3 kann von der beispielshaft beschriebenen Bauform abweichen, sofern dadurch die aerodynamischen Eigenschaften der Vorrichtung 1 im Wesentlichen unverändert bzw. das Flugverhalten stabil bleiben. Das tellerartige Kopfstück 17 des Hauptkörpers 15 der Vorrichtung 1 verfügt im gezeigten Beispiel über zwei Klappen 23, deren eine in Figur 2a zu erkennen ist. Durch diese Klappen 23 erfolgt die Luftzufuhr zu dem Ballute 3.

Figur 2b zeigt einen Schnitt entlang der Linie A-A, die in Figur 2a eingezeichnet ist, Figur 2c zeigt eine Einzelheit B aus Figur 2B. Zu erkennen ist im Inneren der erfindungsgemäßen Vorrichtung 1 die Raketenstufe 2 mit ihrer Spitze 7 und ihren Triebwerken 8. Um den raketenspitzennahen Bereich der Raketenstufe 2 herum ist der Hauptkörper 15 der Atmosphärenwiedereintritts- und Landevorrichtung 1 angeordnet. Dieser verfügt über eine zentrale zylindrische Durchgangsöffnung 18, deren Innendurchmesser auf den Außendurchmesser D der Raketenstufe 2 abgestimmt ist. Neben einem Zylinderstück 16 umfasst der Hauptkörper 15 ein hitzebeständiges und insbesondere abgeflachtes Kopfstück 17, an dem das vordere Ende 4 des Ballutes 3 befestigt ist. Das hintere Ende 5 des Ballutes ist triebwerksnah an der Raketenstufe 2 befestigt.

Beim Wiedereintritt in die Erdatmosphäre (oder eine andere Planetenatmosphäre) wird nun vor dem aus Raketenspitze 7 und Kopfstück 17 und Ballute 3 gebildeten Wiedereintrittskörper ein Plasma gebildet. Sowohl das Kopfstück 17 als auch der Ballute 3 sind entsprechend hitzebeständig ausgebildet. Im dargestellten Beispiel weist der Ballute 3 ein Keramikgewebe auf, zum Beispiel umfasst der Ballute Siliziumcarbid-Gewebe, das mit Zirkonoxid und / oder Inconel beschichtet ist. Die Beschichtung dient dazu, die Luftdurchlässigkeit des Siliziumcarbid-Gewebes zu verringern. Eine Verringerung ist ausreichend, es ist kein vollständiger Luftabschluss (Gasabschluss) notwendig, da dem Ballute 3 in entfaltetem Zustand stets neue Luft (Gas) aus einer Grenzschicht zwischen Plasma und Oberfläche des Wiedereintrittskörpers zugeleitet wird:

Diese Luftzuführung ist in Figur 2c näher dargestellt: Eine hypersonische Luftströmung 19 trifft auf den Wiedereintrittskörper und es entsteht eine Schockwelle 21. Zwischen der etwas kühleren Oberfläche des Wiedereintrittskörpers (Raketenspitze 7, Kopfstück 17 und angrenzende Oberfläche des Ballute 3) und dem davor gebildeten Plasma entsteht eine Grenzschicht 35, in der eine Luftströmung 22 ausgebildet wird. Diese Luftströmung 22 kann durch Klappen 23 in die erfindungsgemäße Atmosphärenwiedereintritts- und Landevorrichtung 1 hineinströmen. Die hineinströmende Luft ist eine subsonische Luftströmung 20. In Figur 2c ist links eine geschlossene Klappe 23 und rechts eine geöffnete Klappe 23 für Illustrationszwecke dargestellt. Öffnen und Schließen der Klappen 23 kann mittels der erfindungsgemäßen Steuerung 33 gesteuert werden, insbesondere auch passiv durch ein Ansteuern der Turbinen 25 (Ansaugen von Luft aus der Grenzschicht). Dann wird bevorzugt ein Federmechanismus zum Schließen/ Rückstellen der Klappen verwendet. Im gezeigten Beispiel sind zwei Klappen 23 vorgesehen, es kann jedoch auch nur eine Klappe oder mehr als zwei Klappen, zum Beispiel drei, vier, fünf oder mehr Klappen vorgesehen sein. Auch ist es möglich, die Klappen 23 durch andere Lufteinlässe zu ersetzen oder zu ergänzen. Die einströmende subsonische Luft 20 gerät im gezeigten Beispiel zunächst in zwei Kammern 24, an deren Ende jeweils eine Turbine 25 angeordnet ist. Durch die Klappen 23 einströmende Luft ist von der Turbine 25 ansaugbar und in den Ballute 3 hineindrückbar, so dass im Ballute 3 ein Überdruck verglichen mit dem Umgebungsdruck entstehen kann. Der Grad dieses Überdrucks kann beispielsweise mittels der erfindungsgemäßen Steuerung 33 eingestellt werden.

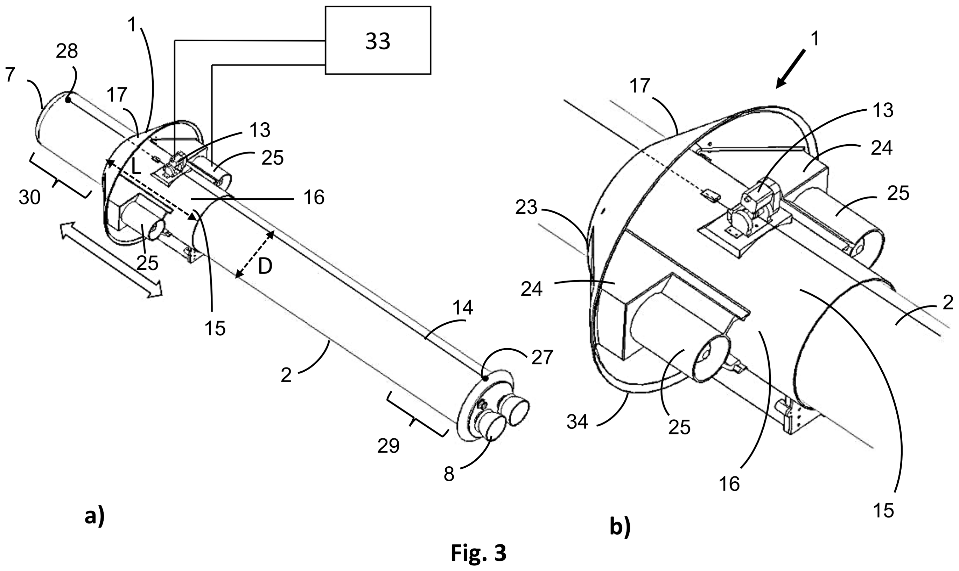

Figur 3 illustriert schematisch einen Umhüllungsmechanismus gemäß der Erfindung. Aus Vereinfachungsgründen ist hier der Ballute 3 nicht mit dargestellt. Figur 3a zeigt die gesamte Raketenstufe 2 mit Raketenspitze 7 und Triebwerk 8, Figur 3b zeigt einen vergrößerten Ausschnitt, in dem Einzelheiten der erfindungsgemäßen Atmosphärenwiedereintritts- und Landevorrichtung 1 näher zu erkennen sind. Im dargestellten Beispiel wird der Umhüllungsmechanismus mittels einer Seilwinde 13 und mittels eines Drahtseiles 14 realisiert, wobei das Drahtseil 14 einen triebwerksseitigen Befestigungspunkt 27 und einen raketenspitzenseitigen Befestigungspunkt 28 aufweist. Mittels der Seilwinde 13, die mittels der Steuerung 33 steuerbar ist, lässt sich die Atmosphärenwiedereintritts- und Landevorrichtung 1 entlang der Raketenstufe 2 verschieben. Konkret ist es möglich, die Vorrichtung 1 von einer Startbefestigungsanordnung 29 bis hin zu einer Landebefestigungsanordnung 30 zu verschieben. Die Bewegung ist dabei durch den Doppelpfeil in Figur 3a angedeutet. Anstelle der Seilwinde 13 könnte auch ein Zahnradsystem und / oder ein Linearantrieb eingesetzt werden, auch andere Ausführungsvarianten sind möglich. Außerdem ist es möglich, das gezeigte System redundant, das heißt doppelt oder allgemein mehrfach, vorzusehen. Dies sorgt für größere Ausfallsicherheit, wobei rein mechanische Systeme ohnehin eine sehr gute Ausfallsicherheit aufweisen.

**In** Figur 3b ist auch die äußere Form der Atmosphärenwiedereintritts- und Landevorrichtung 1 - bis auf den nicht dargestellten Ballute 3 - gut zu erkennen: Die Vorrichtung 1 umfasst einen Hauptkörper 15, der formstabil ist, und der im gezeigten Beispiel ein Zylinderstück 16 und ein tellerartiges Kopfstück 17 aufweist. Das Zylinderstück 16 umschließt dabei gleich einer Manschette einen Abschnitt der Raketenstufe 2. Innen im Zylinderstück 16 ist die zylindrische Durchgangsöffnung 18 vorgesehen, deren Innendurchmesser auf den Außendurchmesser der Raketenstufe 2 abgestimmt ist. Auf diese Weise kann die erfindungsgemäße Vorrichtung 1 beziehungsweise deren Hauptkörper 15 an der Raketenstufe 2 außen entlang gleiten. Die Länge L des Zylinderstückes 16 kann dabei etwa ein Drittel des Durchmessers D der Durchgangsöffnung 18 betragen. Die Winkelung α des tellerartigen Kopfstückes 17 zur Achse der Durchgangsöffnung 18 beträgt im gezeigten Beispiel etwa 45°. Es sind aber jeweils auch andere konkrete Werte möglich.

An dem Hauptstück 15 sind im gezeigten Beispiel zwei Turbinen 25 angeordnet, deren Achsrichtung parallel zur Achsrichtung der Raketenstufe 2 verläuft. Bezogen auf die Achsrichtung ist vor der Turbine 25 jeweils eine Klappe 23 angeordnet, durch die aus der gebildeten Grenzschicht 35 stammende Luft durch die Turbinen 25 in den Ballute 3 (nicht dargestellt) eintreten kann.

**In** Figur 3a ist außerdem die erfindungsgemäße Steuerung 33 schematisch dargestellt. Die Steuerung 33 ist eingerichtet, den Umhüllungsmechanismus, hier konkret die Seilwinde 13, sowie den Befüllungsmechanismus, hier konkret die Turbinen 25 und die Klappen 23 (aktiv oder passiv), anzusteuern. Auch andere Ausführungsvarianten sind möglich. Außerdem kann die Steuerung 33 dazu eingerichtet sein, auch die Transportabdeckung 9 (vergleiche Figur 1) zu öffnen beziehungsweise zu entfernen, zum Beispiel abzusprengen. Die Steuerung 33 kann außerdem in eine Raketensteuerung integriert sein, sie kann aber auch als separate Steuerung vorgesehen sein.

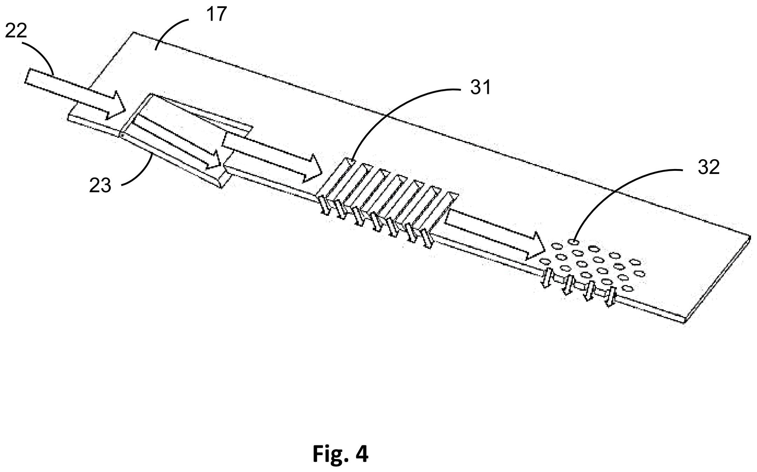

Figur 4 illustriert unterschiedliche Arten von Lufteinlässen für einen Befüllungsmechanismus in schematischer Darstellung. Im gezeigten Beispiel ist nur ein Ausschnitt eines tellerartigen Kopfstückes 17 der erfindungsgemäßen Vorrichtung 1 gezeigt. Dieses weist im dargestellten Beispiel eine Klappe 23, mehrere Lamellen 31 und mehrere Bohrungen beziehungsweise Löcher 32 auf, durch die eine Luftströmung 22 aus der Grenzschicht 35 stammend in den Ballute 3 beziehungsweise hin zu den Turbinen 25 in die Kammern 24 eintreten kann. Dabei ist es bevorzugt so, dass die Lufteinlässe 23, 31, 32 steuerbar sind, das heißt, sie können je nach Bedarf geöffnet oder verschlossen werden. Sehr einfach ist dies natürlich für die dargestellten Klappen 23 zu realisieren. Aber auch für die Lamellen 31 und die Löcher 32 gibt es im Prinzip bekannte Lösungsmöglichkeiten. In einem Beispiel werden die Lufteinlässe 23, 31, 32 passiv durch den Betrieb der Turbinen 25 geöffnet (Ansaugung). Sind die Turbinen 25 (wieder) ausgeschaltet, kann zum Beispiel ein Federmechanismus zum Rückstellen bzw. Schließen der Öffnungen 23, 31, 32 verwendet werden. Es ist aber auch möglich, die Lufteinlässe 23, 31, 32 hydraulisch oder elektromechanisch zu steuern.

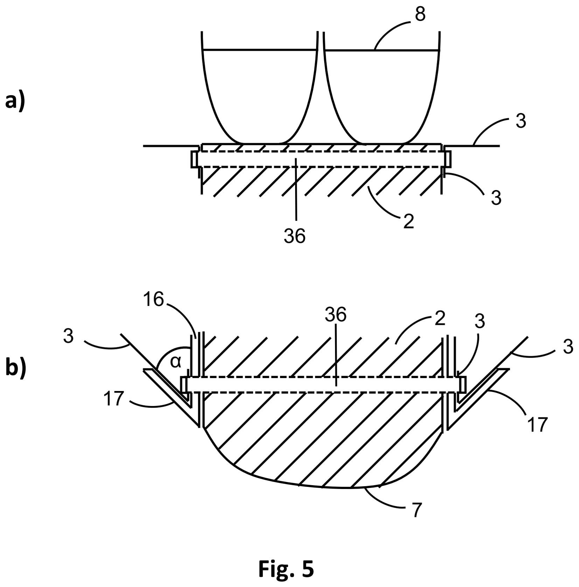

Figur 5 illustriert schematisch Befestigungen eines Ballutes 3. Figur 5a zeigt eine Befestigung des Ballutes 3 nahe des Triebwerkes 8. Im gezeigten Beispiel ist ein Spannring 36 vorgesehen. Zwischen dem Spannring 36 und dem Raketenkörper 2 bzw. der Oberfläche der Rakete ist der Ballute 3 fest eingespannt oder eingeklemmt. Alternativ könnte er auch angeklebt oder anders befestigt sein. Die dargestellte Befestigung sorgt im triebwerksnahen Bereich für einen weitgehend luftundurchlässigen Abschluss zwischen dem Ballute 3 und der von ihm umhüllten Raketenstufe 2. Figur 5b zeigt eine Befestigung des Ballutes 3 am Hauptstück 15 mit Zylinderstück 16 und tellerartigem Kopfstück 17. Auch hier wird im gezeigten Beispiel ein Spannring 36 verwendet, der den Ballute 3 zwischen dem Zylinderstück 16 und dem Spannring 36 weitgehend luftundurchlässig einspannt oder einklemmt. Im gezeigten Beispiel ist keine direkte Befestigung des Ballutes 3 am Kopfstück 17 vorgesehen, stattdessen ist die Befestigung des Ballutes 3 am Kopfstück 17 eine indirekte Befestigung. Der Ballute 3 ist innerhalb des Hauptstücks 15 nur umgelegt bzw. umgeklappt und schmiegt sich an den innenliegenden Rand des tellerartigen Kopfstücks 17 an. Es ist aber zusätzlich oder alternativ auch möglich, den Ballute 3 direkt an dem tellerartigen Kopfstück 17 zu befestigen, beispielsweise von innen oder außen anzukleben. Ein Winkel zwischen dem tellerartigen Kopfstück 17 und dem Zylinderstück 16 (bzw. mit der Achse der zylindrischen Durchgangsöffnung 19) beträgt im dargestellten Beispiel etwa 45°.

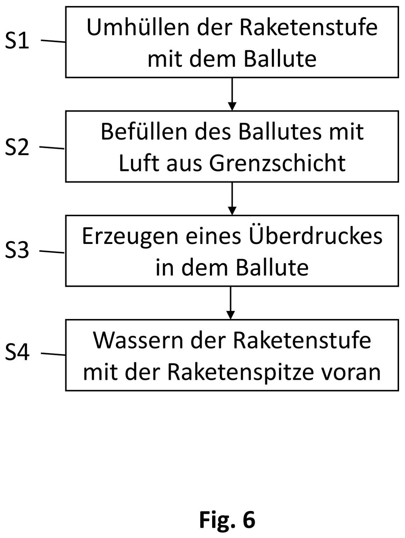

Figur 6 zeigt ein Flussdiagramm eines erfindungsgemäßen Verfahrens für den Wiedereintritt einer Raketenstufe 2 in die Atmosphäre. Dabei wird davon ausgegangen, dass die Rakete 2 bereits gestartet und ausgebrannt ist, beziehungsweise, dass sich der Körper, der wiedereintreten soll, bereits im Orbit befindet. Insofern startet das Verfahren mit dem Verfahrensschritt S1, der ein Umhüllen der Raketenstufe 2 mit einem Ballute 3 vor dem Wiedereintritt umfasst, so dass ein Wiedereintrittskörper gebildet wird. In einem Verfahrensschritt S2 erfolgt dann das Befüllen des Ballutes 3 mit Luft (oder einem anderen Gas) aus einer Grenzschicht, die zwischen einem beim Wiedereintritt gebildeten Plasma und der Oberfläche des Wiedereintrittskörpers entsteht. Das Verfahren kann, muss aber nicht, mit der vorstehend beschriebenen erfindungsgemäßen Atmosphärenwiedereintritts- und Landevorrichtung 1 durchgeführt werden.

**In** einem weiteren optionalen Verfahrensschritt S3 erfolgt ein Erzeugen eines Überdruckes in dem Ballute 3. Es besteht somit keine Notwendigkeit, den Ballute 3 vollständig luftundurchlässig zu gestalten, da immer wieder Luft beziehungsweise Gas nachgefüllt werden kann. Außerdem ist es nicht notwendig, schwere Druckgasbehälter in die Rakete oder die Atmosphärenwiedereintritts- und Landevorrichtung 1 zu integrieren.

**In** einem weiteren Verfahrensschritt S4 erfolgt ein Wassern der Raketenstufe 2 mit der Raketenspitze 7 voran. Dadurch werden die empfindlichen Triebwerke 8 der Raketenstufe 2 vor Wasser beziehungsweise Salzwasser geschützt.

Die erfindungsgemäße Vorrichtung und das erfindungsgemäße Verfahren erlauben es erstmals, nicht nur Boosterstufen, sondern auch Orbitalstufen von Raketen erfolgreich wiederzuverwenden. Außerdem sind Vorrichtung und Verfahren für sämtliche Raketentypen und insbesondere auch für kleine Raketen einsetzbar.

### Bezugszeichenliste

- 1: Atmosphärenwiedereintritts- und Landevorrichtung
- 2: Raketenstufe
- 3: Ballute
- 4: Unterer Bereich des Ballutes
- 5: Oberer Bereich des Ballutes
- 6: Strömungsabriss-Ring
- 7: Spitze der Raketenstufe
- 8: Triebwerk der Raketenstufe
- 9: Transportabdeckung
- 10: Startzone
- 11: Wasser
- 12: Instandsetzungsgelände
- 13: Seilwinde
- 14: Drahtseil
- 15: Hauptkörper
- 16: Zylinderstück
- 17: Tellerartiges Kopfstück
- 18: Zylindrische Durchgangsöffnung
- 19: Hypersonische Luftströmung
- 20: Subsonische Luftströmung
- 21: Schockwelle
- 22: Strömung in Grenzschicht
- 23: Lufteinlass, Klappe
- 24: Kammer
- 25: Turbine
- 26: Innenraum des Ballutes
- 27: Triebwerkseitiger Befestigungspunkt
- 28: Spitzenseitiger Befestigungspunkt
- 29: Startbefestigungsanordnung
- 30: Landebefestigungsanordnung
- 31: Lamelle
- 32: Loch
- 33: Steuerung
- 34: Rand des Kopfstückes
- 35: Grenzschicht
- 36: Spannring
- L: Länge des Zylinderstückes in Achsrichtung
- D: Durchmesser des Zylinderstückes
- α: Winkel zwischen Kopfstück und Zylinderstück

## Patentansprüche

1. Atmosphäreneintritts- und Landevorrichtung für einen Körper zum sicheren Atmosphäreneintritt und zur sicheren Wasserung, die Folgendes aufweist:
einen Transportbereich, der eingerichtet ist, um einen Körper beim Transport aufzunehmen;
einen Ballute, der konfiguriert ist, um in einem ersten Zustand gefaltet und in einem zweiten Zustand entfaltet vorzuliegen und in dem zweiten Zustand die Vorrichtung von außen im Wesentlichen zu umhüllen;
einen Umhüllungsmechanismus, der eingerichtet ist, die Umhüllung mit dem Ballute durchzuführen;
einen Befüllungsmechanismus, der eingerichtet ist, den Ballute in entfaltetem Zustand bei einem Atmosphäreneintritt mit Luft bzw. Gas aus einer Grenzschicht zu befüllen, die zwischen dem vor der Oberfläche der Vorrichtung beim Eintritt gebildeten Plasma und der Oberfläche der Vorrichtung entsteht; und
eine Steuerung, die eingerichtet ist, den Umhüllungsmechanismus und den Befüllungsmechanismus zu steuern.

2. Vorrichtung gemäß Anspruch 1,
wobei der Körper an dem Transportbereich befestigt ist.

3. Vorrichtung gemäß einem der vorangehenden Ansprüche,
wobei der Körper von dem Transportbereich vollständig umschlossen ist.

4. Vorrichtung gemäß einem der vorangehenden Ansprüche,
wobei die Vorrichtung ein hitzebeständiges und abgeflachtes Kopfstück (17) aufweist, an dem ein - bezogen auf die Ausrichtung des Ballutes (3) beim Eintritt in die Atmosphäre - vorderes Ende des Ballutes (3) befestigt ist.

5. Vorrichtung gemäß dem vorangehenden Anspruch,
wobei das abgeflachte Kopfstück (17) einen verschließbaren Lufteinlass (23, 31, 32) aufweist, durch den die Luft aus der Grenzschicht (35) in den Ballute (3) einströmen kann.

6. Vorrichtung (1) gemäß dem vorangehenden Anspruch,
wobei der Lufteinlass eine Klappe (23), Lamellen (31) und/ oder Bohrungen (32) aufweist.

7. Vorrichtung gemäß einem der Ansprüche 4 bis 6,
wobei die Vorrichtung einen formstabilen Hauptkörper (15) aufweist,
wobei an dem Hauptkörper (15) mindestens eine Turbine (25) derart angeordnet ist, dass durch den Lufteinlass (23, 31, 32) einströmende Luft von der Turbine (25) ansaugbar und in den Ballute (3) hineindrückbar ist, so dass im Ballute (3) ein Überdruck verglichen mit dem Umgebungsdruck entstehen kann.

8. Vorrichtung gemäß einem der Ansprüche 4 bis 7,
wobei das abgeflachte Kopfstück keine zentrale Öffnung aufweist.

9. Vorrichtung (1) gemäß einem der vorangehenden Ansprüche,
wobei der Ballute (3) hochtemperaturfest ausgebildet ist und eine geringe Luftdurchlässigkeit aufweist; und/ oder
wobei der Ballute (3) ein Keramikgewebe und/ oder ein Kohlefasergewebe aufweist.

10. Vorrichtung gemäß einem der vorangehenden Ansprüche,
wobei der Umhüllungsmechanismus durch das Öffnen oder Absprengen einer Transportabdeckung realisiert ist.

11. Verfahren für den Eintritt eines Körpers in die Atmosphäre, insbesondere unter Verwendung der Atmosphäreneintritts- und Landevorrichtung gemäß einem der vorangehenden Ansprüche, das die folgenden Schritte aufweist:
Umhüllen des Körpers mit einem Ballute (3) vor dem Atmosphäreneintritt, so dass ein Wiedereintrittskörper gebildet wird; und
Befüllen des Ballutes mit Luft aus einer Grenzschicht, die zwischen einem beim Atmosphäreneintritt gebildeten Plasma und der Oberfläche des Atmosphäreneintrittskörpers entsteht.

12. Verfahren gemäß Anspruch 11,
wobei das Befüllen des Ballutes durch kontrolliertes Einsaugen von Luft bzw. Gas erfolgt, wobei die Luft bzw. das Gas kontrolliert mittels Turbinen durch einen Lufteinlass im Atmosphäreneintrittskörpers nach innen in den Ballute gesaugt wird.

13. Verfahren gemäß Anspruch 12,
wobei die Luft bzw. das Gas in dem Ballute gestaut wird.

14. Verfahren gemäß einem der Ansprüche 11 bis 13, das des Weiteren den folgenden Schritt aufweist:
Öffnen oder Absprengen einer Transportabdeckung, so dass der Ballute freigesetzt wird und zum Befüllen bereit ist.

15. Verfahren gemäß einem der Ansprüche 11 bis 14, das des Weiteren den folgenden Schritt aufweist:
Wassern des Wiedereintrittskörpers.
